Europäisches Patentamt

European Patent Office

Office européen des brevets

(11) Numéro de publication : **0 541 417 A1**

# (12) DEMANDE DE BREVET EUROPEEN

(21) Numéro de dépôt : **92402882.2**

(22) Date de dépôt : **22.10.92**

(51) Int. Cl.$^5$ : **E02F 3/84**

(30) Priorité : **06.11.91 FR 9113693**

(43) Date de publication de la demande :
**12.05.93 Bulletin 93/19**

(84) Etats contractants désignés :
**BE DE GB IT NL**

(71) Demandeur : **LASERDOT**
**37, boulevard de Montmorency**
**F-75781 Paris Cedex 16 (FR)**

(72) Inventeur : **Gaffard, Jean-Paul**
**17, rue Béranger**
**F-77300 Fontainebleau (FR)**
Inventeur : **Chabassier, Geneviève**
**17, allée des Cépages**
**F-94260 Presnes (FR)**

(74) Mandataire : **Santarelli, Marc**
**Cabinet Rinuy et Santarelli 14, avenue de la**
**Grande Armée**
**F-75017 Paris (FR)**

(54) **Dispositif de guidage asservi sur faisceau laser pour une machine de travaux publics.**

(57) Le dispositif comporte : un émetteur laser ($50_{1,2}$) et deux récepteurs laser ($30_1$, $30_2$) montés chacun sur un bloc de déplacement mobile selon deux degrés de liberté ; deux capteurs de position de récepteur associés à chaque bloc aptes à mesurer sa position selon deux degrés de liberté ($y_i$, $z_i$) et à générer des signaux représentatifs de celle-ci ; un capteur de position de machine ($30_3$, $50_{3,4}$) apte à mesurer sa position selon un cinquième degré de liberté, et à générer un signal représentatif de celle-ci ; un calculateur (70) sensible auxdits signaux, apte à mémoriser les caractéristiques géométriques de la surface sur laquelle la machine est guidée, et adapté à réaliser l'asservissement bidimensionnel de chaque récepteur ($30_1$, $30_2$) pour maintenir ce dernier centré sur le faisceau de l'émetteur laser ($50_{1,2}$), et à générer en temps réel les ordres de commande appliqués aux actionneurs contrôlant la machine (10), en fonction des caractéristiques géométriques.

Fig.1

EP 0 541 417 A1

La présente invention concerne un dispositif de guidage d'une machine de travaux publics, dont les évolutions sont contrôlées au moyen d'actionneurs, devant évoluer le long d'un chemin prédéterminé dont la surface se développe selon trois dimensions, du genre mettant en oeuvre un émetteur laser et deux récepteurs laser.

Une application préférée, mais non exclusive, de la présente invention est le guidage de machines destinées à réaliser le revêtement de-routes ou de pistes, ces routes ou pistes se développent selon trois dimensions. Il s'agit de machines de grande envergure (de l'ordre de 10 m) qui sont, à ce jour, guidées au moyen de fils tendus de part et d'autre de la route ou piste devant être surfacée et/ou revêtue. Ces machines de surfaçage et de revêtement sont bien connues. A titre d'exemple, on peut citer la machine fabriquée et commercialisée sous la référence GP-2500 par la Société GOMACO CORPORATION, Ida Grove, Iowa, Etats-Unis d'Amérique 51445.

Un tel dispositif de guidage est en pratique passablement compliqué et long à mettre en oeuvre, en raison des nombreuses manipulations devant être faites à l'occasion de la mise en place des fils. De plus, lorsque la route ou la piste doit se développer selon une courbe, ladite courbe est approximée par des séries de segments, le long desquels les fils de guidage doivent être tendus, ce qui multiplie les opérations de mise en place et de réglage du dispositif de guidage, en particulier lorsque la machine arrive au niveau des jonctions entre lesdits segments.

Un objectif de la présente invention est donc de simplifier ce dispositif de guidage sans avoir à modifier de façon substantielle la machine.

Par ailleurs, dans l'état de la technique, on connaît, par le document GB-A-2.228.507 une machine de surfaçage comportant un outil pouvant être positionné en hauteur par rapport à la machine et à la surface travaillée, deux récepteurs laser agencés sur des vérins disposés au-dessus de l'outil et montés de telle sorte qu'ils déplacent lesdits récepteurs laser dans une direction verticale, un compteur de distance parcourue, et une logique sensible aux signaux des récepteurs et au compteur, adaptée à commander les vérins de l'outil. Les récepteurs laser coopèrent avec un émetteur laser agencé au-dessus de la surface à travailler, à une hauteur prédéterminée et adapté à balayer un plan de référence avec un faisceau laser.

La logique comporte en mémoire le profil de la surface devant être façonnée. En réponse à des signaux logiques transmis par les récepteurs laser et le compteur de distance, la logique commande les vérins, pour maintenir les récepteurs dans le plan de référence et positionne l'outil pour façonner la surface conformément au profil mémorisé.

On observera que cette machine ne permet que de positionner l'outil par rapport au plan de référence selon un axe perpendiculaire à ce dernier. Elle ne permet donc pas de guider la machine selon un chemin ou une route dont la surface se développe selon trois dimensions. En particulier, elle ne permet pas le guidage de la machine le long d'une courbe.

Par ailleurs, comme le faisceau laser balaye une surface importante, et ne rencontre les récepteurs qu'en deux points de cette surface, on appréciera que beaucoup d'énergie lumineuse des lasers est ainsi dissipée dans l'atmosphère. Comme le faisceau n'est pas collimaté sur le récepteur, une importante énergie doit être fournie pour obtenir une portée importante.

La présente invention vise un dispositif de guidage mettant en oeuvre certains des enseignements du document GB-A-2.228.507, mais susceptible d'une part, de guider une machine de travaux publics pour le façonnage d'une surface tridimensionnelle, permettant notamment de surfacer ou revêtir des routes ou des chemins, lorsque ces derniers se développent selon une courbe, tout en ayant un meilleur rendement que la machine de l'état de la technique analysé ici.

La présente invention remplit les objectifs susmentionnés puisqu'elle se rapporte à un dispositif de guidage d'une machine de travaux publics dont les évolutions sont contrôlées au moyen d'actionneurs, devant évoluer le long d'un chemin prédéterminé dont la surface se développe selon trois dimensions, mettant en oeuvre au moins un émetteur laser et un premier et second récepteurs laser, caractérisé en ce que les deux récepteurs laser sont montés chacun sur un bloc de déplacement, en translation ou rotation, mobile selon deux degrés de liberté, le dispositif comportant en outre :

- un ensemble de deux capteurs de position de récepteur associé à chaque bloc de déplacement, les capteurs étant aptes à mesurer la position du bloc considéré selon deux degrés de liberté, et à générer des signaux représentatifs de celle-ci,
- un premier capteur de position de machine apte à mesurer la position de la machine selon un cinquième degré de liberté, et à générer un signal représentatif de celle-ci,
- un calculateur sensible auxdits signaux, apte à mémoriser, notamment, les caractéristiques géométriques dudit chemin, et adapté d'une part, à réaliser l'asservissement bidimensionnel de chaque récepteur pour maintenir ce dernier centré sur le faisceau de l'émetteur laser, ou de l'un, prédéterminé, des émetteurs laser, et, d'autre part, à générer en temps réel les ordres de commande appliqués aux actionneurs contrôlant la machine, notamment en fonction desdites caractéristiques géométriques, pour la faire évoluer le long dudit chemin.

Grâce à ces caractéristiques, la présente invention réalise les objectifs susmentionnés. En particulier, on notera qu'elle est apte à guider la machine de travaux publics selon une courbe. Par ailleurs, on observera que comme le faisceau laser est collimaté sur les récepteurs, le rendement de l'énergie lumineuse dissipée est bien meilleur que dans le dispositif décrit dans le document de l'état de la technique analysé ci-dessus. Ainsi, à puissance d'émission égale, le dispositif selon la présente invention peut travailler dans des atmosphères'nettement plus perturbées, par de la poussière notamment, que le dispositif de l'état de la technique analysé ci-dessus.

L'homme de l'art appréciera en outre que les machines de travaux publics préalablement guidées au moyen de fils peuvent être adaptées facilement et à faible coût pour recevoir les divers moyens du dispositif de guidage conforme à l'invention.

Selon une autre caractéristique de l'invention, avantageusement mise en oeuvre dans un mode de réalisation préféré, ledit premier capteur de position de machine est réalisé au moyen d'un troisième récepteur laser coopérant avec un second émetteur laser, le troisième récepteur laser étant monté sur un troisième bloc de déplacement en translation ou rotation, mobile selon deux degrés de liberté, le dispositif comportant en outre un ensemble de deux capteurs de position de récepteur, associé au troisième bloc de déplacement et aptes à mesurer la position de ce dernier selon deux degrés de liberté et à générer un signal représentatif de celle-ci, tandis que le calculateur est en outre adapté à prendre en compte les signaux issus des capteurs de position du troisième bloc et à réaliser l'asservissement bidimensionnel du troisième récepteur pour maintenir ce dernier centré sur le faisceau du second émetteur laser.

Grâce à ces dispositions, au moyen de deux émetteurs laser, la position de la machine selon cinq degrés de liberté est connue, tandis que la mesure selon un degré de liberté excédentaire, donnée par le troisième ensemble de deux capteurs de position associés au troisième bloc de déplacement, fournit une indication redondante, permettant, avantageusement, de minimiser d'éventuelles erreurs résiduelles.

Dans ce mode de réalisation préféré, il est prévu un capteur de position de la machine qui permet avantageusement de connaître la position de la machine, le long du chemin façonné par elle (sixième degré de liberté).

Selon une autre caractéristique de l'invention, avantageusement mise en oeuvre dans un mode de réalisation préféré, il est prévu un autre récepteur laser dit de "mesure de vrillage" associé à un autre émetteur laser, ce récepteur laser étant monté sur un bloc de déplacement en translation ou rotation mobile selon deux degrés de liberté, le dispositif comportant en outre un ensemble de deux capteurs de position de récepteur associé au bloc de déplacement portant le récepteur laser de mesure de vrillage et aptes à mesurer la position de ce dernier selon deux degrés de liberté, et à générer des signaux représentatifs de celle-ci, tandis que le calculateur est en outre adapté à prendre compte les signaux issus des capteurs de position de récepteur du bloc portant le récepteur laser de mesure de vrillage et à réaliser l'asservissement bidimensionnel de ce dernier, pour le maintenir centré sur le faisceau laser dudit autre émetteur laser.

Grâce à cette disposition, on dispose ainsi de deux informations supplémentaires permettant notamment de prendre en compte le vrillage éventuel de la machine de travaux publics. En effet, il a été exposé plus haut que le type de machine devant être guidé par le dispositif selon la présente invention présente en général une assez grande envergure (de l'ordre de 10 m ou même plus). En dépit de la robustesse de ces machines, celles-ci subissent un vrillage, qui est ainsi pris en compte par le dispositif de guidage selon la présente invention, ce qui permet au calculateur d'apporter les corrections nécessaires, pour annuler, ou à tout le moins, limiter toutes erreurs susceptibles d'être engendrées par ce vrillage.

Les caractéristiques et avantages de l'invention ressortiront de la description qui va suivre en référence aux dessins annexés sur lesquels :

- la figure 1 est une vue schématique d'un premier mode préféré de réalisation de l'invention,
- la figure 2 illustre de façon schématique l'agencement des principaux éléments d'un récepteur utilisé dans le mode préféré de réalisation,
- la figure 2a est une vue simplifiée en perspective avec arrachement partiel d'un mode de réalisation du récepteur 30, schématisé en figure 2,
- la figure 3 est une vue schématique de principe du bloc de déplacement en translation associé à chacun des récepteurs dans le mode préféré de réalisation de l'invention,
- la figure 4 illustre, de façon schématique, les principaux éléments des émetteurs laser utilisés dans le mode préféré de réalisation de l'invention,
- la figure 5 est un schéma logique simplifié du dispositif illustré en figure 1, et
- la figure 6 est une vue schématique illustrant la mise en oeuvre du mode préféré de réalisation du dispositif de guidage conforme à l'invention.

Dans le mode préféré de réalisation représenté aux figures, le dispositif de guidage est mis en oeuvre sur une machine destinée à réaliser le revêtement de routes ou de pistes du type de celle fabriquée et commercialisée sous la référence GP-2500 par la Société GOMACO CORPORATION, Ida Grove, Iowa, Etats-Unis d'Amérique 51445.

Une telle machine est normalement guidée au moyen d'un système de guidage comportant des fils tendus de part et d'autre de la route ou piste devant être surfacée et revêtue.

La structure d'une telle machine est bien connue de l'homme de l'art et n'entre pas dans le cadre de la présente invention, laquelle n'est d'ailleurs nullement limitée à sa mise en oeuvre sur cette machine. Cette structure ne sera donc pas décrite plus en détail ici.

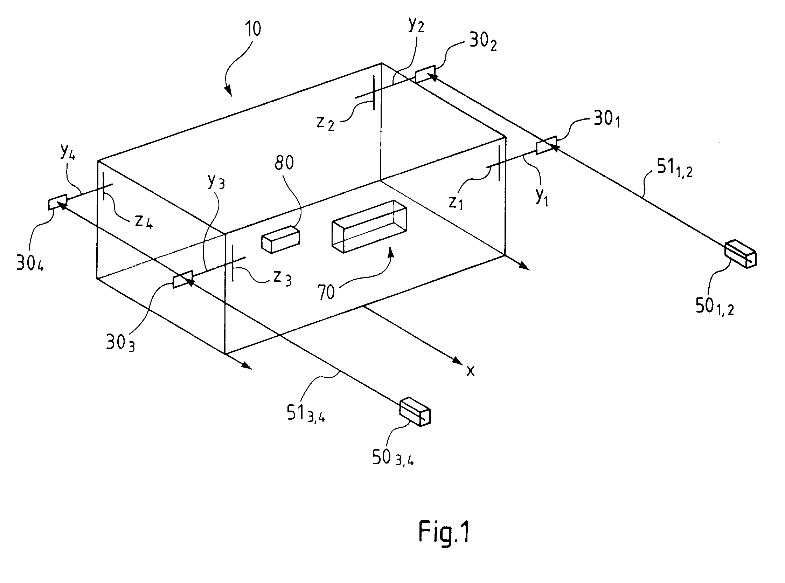

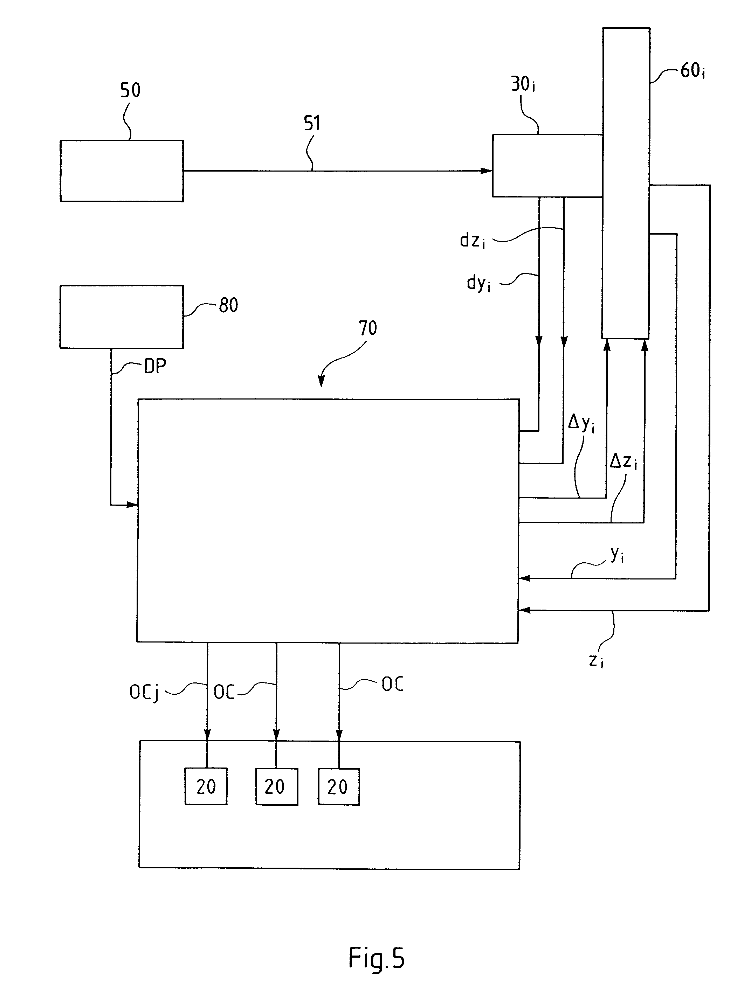

Sur les figures 1 et 5, la machine est symbolisée sous la référence 10, tandis que les actionneurs contrôlant les évolutions de cette machine (actionneurs contrôlant par exemple le mécanisme de direction, les mécanismes de contrôle de vitesse ...) sont symbolisés, en figure 5, sous la référence 20. La structure de ces actionneurs est en soi connue de l'homme de l'art. Pour la compréhension de la présente invention, il suffit de prendre note que ces actionneurs peuvent être commandés au moyen de signaux logiques basse tension.

Conformément à l'invention, la machine 10 comporte au moins deux récepteurs laser $30_i$ montés sur un bloc de déplacement mobile selon deux degrés de liberté. Dans ce mode de réalisation, le bloc de déplacement est mobile en translation selon les axes $y_i$ et $z_i$, qui sont des axes perpendiculaires à un axe x, parallèle à la direction de déplacement de la machine, lorsque cette dernière se déplace vers l'avant selon une droite. Les axes $y_i$ sont horizontaux tandis que les axes $z_i$ sont verticaux.

Dans le mode de réalisation choisi et représenté sur la figure, quatre récepteurs lasers $30_1$, $30_2$, $30_3$, $30_4$, sont agencés sur des blocs de déplacement en translation mobiles respectivement selon les paires d'axes $(y_1, z_1)$, $(y_2, z_2)$, $(y_3, z_3)$ et $(y_4, z_4)$.

On observe, figure 1, que les deux premiers récepteurs lasers $30_1$, $30_2$, sont alignés sur le faisceau $51_{1,2}$ d'un premier émetteur laser symbolisé en $50_{1,2}$ tandis que les deux récepteurs $30_3$ et $30_4$ sont alignés sur le faisceau $51_{3,4}$ d'un second émetteur laser $50_{3,4}$.

Les émetteurs lasers 50 sont disposés de part et d'autre du chemin ou de la route devant être revêtue au moyen de la machine 10 et agencés de façon à émettre des faisceaux 51, parallèles entre-eux et présentant l'écartement voulu pour se trouver en regard des récepteurs laser considérés.

Dans la machine 10, sont agencés en outre :

- un compteur de distance parcourue par la machine le long du chemin façonné par elle, depuis un point choisi arbitrairement comme origine. Cette mesure est qualifiée ici par convention "mesure selon le sixième degré de liberté". Le compteur de distance est symbolisé sous la référence 80 et fournit un signal en tension, proportionnel à la distance parcourue par la machine depuis ladite origine. Il est dans cet exemple constitué d'une roue accrochée derrière la machine et associée à un codeur angulaire incrémental. Un tel codeur fournit, lorsque la roue tourne, un signal électrique formé par une série d'impulsions. Ce codeur peut être choisi parmi ceux existant dans le commerce.

Le comptage de ces impulsions permet moyennant un étalonnage préalable, le calcul de la distance parcourue par la machine depuis l'origine.

- un calculateur 70.

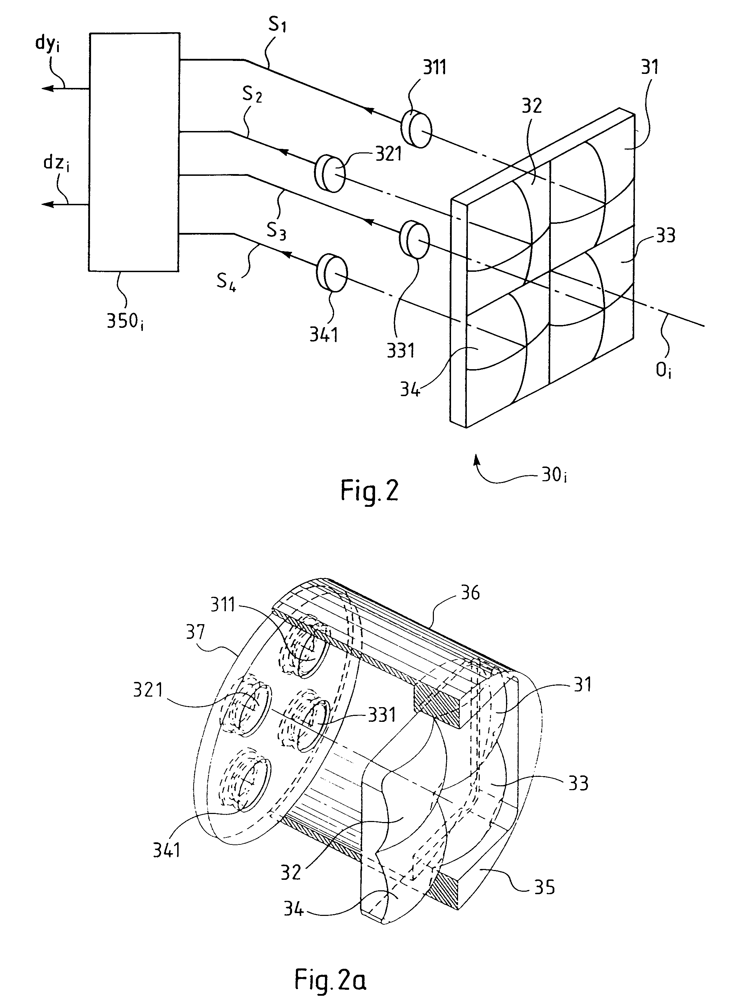

En figure 2, on a représenté schématiquement les principaux éléments des récepteurs laser utilisés dans ce mode de réalisation de la présente invention.

Chaque récepteur $30_i$ est composé de quatre lentilles 31-34 focalisant le faisceau laser sur quatre récepteurs (photodétecteurs) 311, 321, 331 et 341 respectivement agencés au foyer de chaque lentille 31-34. Les photodétecteurs mis en oeuvre sont des photo-diodes au silicium du type de celles fabriquées par la Société CENTRONIC LIMITED, Centronic House, King Henry's Drive, New Addington, CROYDON, Surrey, Grande-Bretagne et commercialisées sous la référence OS D 60-0. Les lentilles utilisées sont des lentilles plan-convexes de dimensions 25 x 25 mm2 et de focal 50 mm, du type de celles commercialisées par la Société MELLES GRIOT, 1770 Kettering Street, IRVINE, California 92714, Etats-Unis d'Amérique sous la référence O1 LPX 111. Le diamètre utile de réception est voisin de 50 mm. Le point de jonction des lentilles 31-34 défini l'axe $O_i$ du récepteur $30_i$ considéré. L'axe $O_i$ est parallèle à l'axe x. Les photo-détecteurs 311, 321, 331 et 341 émettent en sortie chacun un signal (respectivement $S_1$-$S_4$). Ces signaux sont proportionnels à l'énergie reçue et sont dirigés vers un circuit électronique de décodage $350_i$, associé à chaque récepteur $30_i$. Le niveau du signal en sortie des détecteurs (signaux S1-S9) est environ de 15 nA lorsque l'axe $0_i$ récepteur $30_i$ est centré sur le fasceau laser.

Le circuit électronique de décodage $350_i$ comporte des circuits permettant l'amplification puis la démodulation des signaux $S_1$ - $S_4$. Le circuit $350_i$ comporte également un circuit analogique effectuant les sommes et différences deux à deux des signaux $S_1$ et $S_4$ ainsi que la division par la somme des signaux, de telle sorte que les écarts d'alignement de l'axe $O_i$ du récepteur $30_i$, par rapport au faisceau laser sont ainsi indépendants de l'énergie reçue. Le circuit $350_i$ émet donc des signaux $dy_i$ et $dz_i$ représentatifs des écarts respectifs sur l'axe horizontal $y_i$ et vertical $z_i$ conformément aux formules :

$$dy_i = \frac{(S_1 + S_4) - (S_2 + S_3)}{(S_1 + S_2 + S_3 + S_4)}$$

$$dz_i = \frac{(S_1 + S_2) - S_4 + S_3)}{(S_1 + S_2 + S_3 + S_4)}$$

La structure du circuit $350_i$ ne sera pas décrite plus en détail ici. Elle est en effet à la portée de l'homme du métier qui sait réaliser les opérations susmentionnées sur des signaux bas niveau du type des signaux $S_1$-$S_4$, notamment en utilisant des amplificateurs opérationnels polarisés de façon adéquate et des circuits RC.

La figure 2a est une vue simplifiée en perspective avec arrachement partiel d'un mode de réalisation du récepteur $30_i$ schématisé en figure 2. On reconaît sur cette figures les photodétecteurs 311, 321, 331 et 341, ainsi que les lentilles 31-34 associées à chacun de ces photodétecteurs. Les quatre lentilles 31-34 sont accolées de façon à former un carré. Cet ensemble est ensuite repris par une couronne 35 agencée à l'extrémité d'un corps cylindrique 36. Les photodétecteurs sont montés sur un bâti 37 agencé à l'extrémité opposée du corps 36. L'ensemble est étanche au ruissellement et forme ainsi une chambre noire propice au bon fonctionnement des photodétecteurs. Le boîtier cylindrique 36 est ici réalisé en tôle d'aluminium.

Le circuit $350_i$ est logé avec les autres équipements, en particulier le calculateur, dans un boîtier non représenté agencé dans la machine 10.

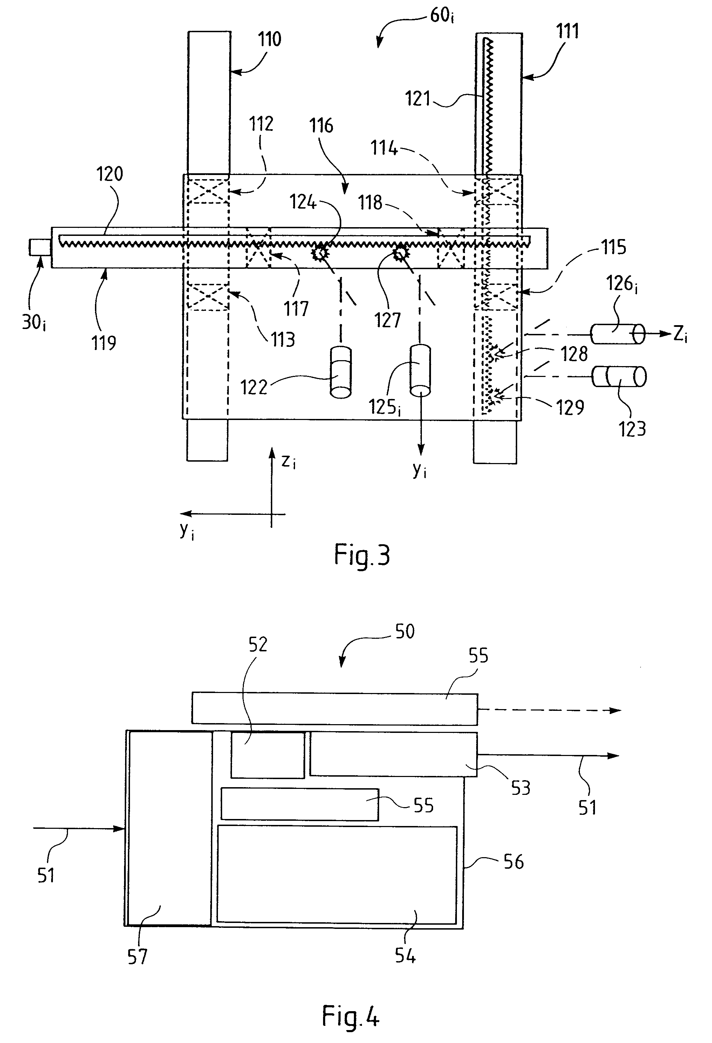

On va maintenant succinctement décrire, à l'appui de la figure 3, les blocs de déplacement en translation utilisés dans ce mode préféré de réalisation et sur lesquels sont agencés les récepteurs laser $30_i$. Ces blocs sont mobiles selon les axes $y_i$, $z_i$.

Dans ce mode de réalisation, chaque bloc de déplacement $60_i$ comporte deux glissières verticales 110, 111 montées fixes sur la structure de la machine (non représentée en figure 3). Chacune des glissières verticales 110, 111 portent deux chariots mobiles 112-115. Ces chariots sont aptes à coulisser le long de la glissière dans laquelle ils sont montés. L'agencement spécifique des glissières et des chariots est à la portée de l'homme de l'art et ne sera pas décrit plus en détail ici.

Sur la face opposée de la platine 116, par rapport à celle où sont montés les chariots 112-115, sont montés deux autres chariots 117, 118. Tout comme les chariots 112-115, les chariots 117, 118 sont montés fixes par rapport à la platine. Les chariots 117, 118 permettant le coulissement d'une glissière horizontale 119. Dans ce mode de réalisation, les chariots 117, 118 et la glissière 119 sont du même type que les chariots 112-115 et les glissières 110-111. Le récepteur $30_i$ est agencé à l'une des extrémités de la glissière 119, l'extrémité de gauche sur la figure 3.

Deux crémaillères, respectivement 120, 121, sont montées fixes sur la glissière horizontale 119 et la glissière verticale de droite 111.

La platine 116 porte également deux ensembles moto-réducteurs, constitués en l'espèce chacun par un moteur MAXON référence F 21-40937, et un réducteur MAXON référence 29-38-803-0018.0-000, fabriqués par INTERELECTRIC S.A. Sachseln/OW Confédération Helvétique 6072. Ces moto-réducteurs ont été schématisés sur la figure 3 sous les références 122, 123. Ils sont montés fixes sur la platine 116. L'ensemble moto-réducteur 122 entraîne un pignon 124 (la transmission ayant été représentée de façon schématique par des traits interrompus), ce pignon engrénant sur la crémaillère 120 de la glissière 119. De même, l'ensemble moto-réducteur 123 entraîne un pignon 129 engrénant sur la crémaillère 121 agencée sur la glissière 111. De la sorte lorsque les moteurs 122 et 123 sont alimentés, ils permettent le déplacement de la platine 116 le long des glissières 110, 111 (ce qui entraîne un déplacement du récepteur $30_i$ selon l'axe $z_i$) et le déplacement de la glissière 119, par rapport à la platine 116 (ce qui entraîne un déplacement du récepteur $30_i$ selon l'axe $y_i$).

Des codeurs digitaux (dans ce mode de réalisation fabriqués INTERELECTRIC S.A. et commercialisés sous la référence 34-16) sont prévus pour mesurer le déplacement de la platine 116 le long des glissières 110-111 et de la glissière 119 par rapport à la platine 116. Ces codeurs référencés en $125_i$ (axe $y_i$) et $126_i$ (axe $z_i$), sont entraînés respectivement par des pignons 127, 128 coopérant eux-mêmes respectivement avec la crémaillère horizontale 120 et la crémaillère verticale 121.

Les codeurs digitaux $125_i$, $126_i$ émettent des signaux permettant de déterminer la position $Y_i$, $Z_i$ de chaque récepteur $30_i$ sous forme de séries d'impulsions.

Les ensembles moto-réducteurs 122, 123 sont alimentés par des séries d'impulsions en tension, positives ou négatives, délivrées par sortie d'une carte d'interface agencée entre les moteurs des ensembles moto-réducteurs 122, 123 et le calculateur 70 (voir infra).

Dans ce mode de réalisation, la course des mouvements en translation du récepteur $30_i$ est de 1 m selon l'axe $y_i$ et 50 cm selon l'axe $z_i$.

La figure 4 illustre schématiquement les principaux éléments des émetteurs laser utilisés dans le mode de réalisation de la présente invention présentement décrit.

Les émetteurs 50 comportent essentiellement une diode laser 52 (ici du type de celle fabriquée par MELLES GRIOT, modèle 06DLL207, émettant vers 0,78 $\mu$m un faisceau d'une puissance maximale de 3 mW). Ces faisceaux sont collimatés par un dispositif afocal 53, de telle sorte que le faisceau a un diamètre de 20 mm à la distance de 200 m.

Dans ce mode de réalisation, l'afocal 53 employé est un dispositif à deux lentilles caractérisé par un rapport de grandissement voisin de 3.

L'émetteur comporte également un dispositif électronique 54 remplissant une double fonction :
- alimentation de la diode 52,
- modulation d'intensité du faisceau à haute fréquence, pour faciliter la détection de ce dernier (l'électronique $350_i$ du récepteur comporte un circuit de démodulation).

L'ensemble émetteur est ici stabilisé en température à 25°C par un dispositif 55 à effet PELTIER, de façon à pouvoir fonctionner avec des températures ambiantes proches de 40°C.

Afin de faciliter le pointage d'un émetteur sur l'autre (voir infra), un laser auxiliaire 55 visible HeNe ou une diode de petite puissance est ajoutée. Ce faisceau auxiliaire présente en outre l'avantage de signaler aux utilisateurs la présence du faisceau infra-rouge non visible émis par l'ensemble diode 52 - collimateur 53.

La référence 56 indique un capotage de protection de l'ensemble.

Les émetteurs sont prévus pour être montés sur des trépieds (non représentés) analogues aux trépieds de géodésie. Chaque émetteur est en outre muni d'un dispositif de réception 57 analogue à l'ensemble de réception décrit à l'appui de la figure 3, les signaux dy et dz étant dirigés sur des voltmètres afficheurs. Un mécanisme de réglage de la position de l'émetteur sur le trépied est prévu de telle sorte que l'installateur peut régler, au moyen des voltmètres montrant le niveau des écarts dy et dz, la position de l'émetteur 50 considéré, de telle sorte que ce dernier soit centré, sur le faisceau 51 envoyé par un autre émetteur.

On va maintenant décrire, à l'appui de la figure 5, le schéma bloc de l'ensemble du système de guidage.

Sur cette figure, on a représenté, sous la référence 50, l'un des émetteurs, et sous les références $30_i$ et $60_i$ l'un des récepteurs monté sur son bloc de déplacement. Pour faciliter la compréhension de ce schéma, l'autre émetteur et les autres récepteurs n'ont pas été représentés.

Conformément à l'invention, le dispositif comporte un calculateur 70 appelé à jouer diverses fonctions. Le calculateur 70 comporte une unité centrale, ici de type IBM PC, et diverses cartes interfaces nécessaires à la liaison avec les différents organes périphériques (récepteurs, codeurs de position, moteur, compteur de distance, actionneurs).

Les cartes interface sont classiques. Celles utilisées ici sont fabriquées et commercialisées par I.C.S. INDUSTRIAL COMPUTER SOURCE 4837 Mercury Street, SAN DIEGO, Californie 9211, Etats-Unis d'Amérique sous les références indiquées ci-après :

- la carte AI 016-BF pour réaliser l'acquisition et la conversion analogique digitale des signaux issus des écartomètres,
- la carte DIO 216 pour réaliser l'acquisition des signaux émis par les codeurs ($125_i$, $126_i$) des unités de déplacement et par la cinquième roue,
- la carte AO B12 pour assurer la commande des moteurs des ensembles moto-réducteurs 122, 123 des blocs de déplacement $60_i$,
- la carte AO B6 pour transmettre les tensions pour commander les actionneurs de la machine.

Les informations en entrée du calculateur 70 sont les suivantes :

- signaux $dy_i$, $dz_i$ en provenance de chacun des récepteurs $30_i$,
- position $Y_i$ et $Z_i$ de chaque récepteur $30_i$, telle qu'elle est mesurée par les détecteurs de position (codeurs digitaux $125_i$, $126_i$) associés aux blocs de translation $60_i$,
- signal DP, représentant la distance parcourue par la machine, fourni par le compteur de distance 80.

Les signaux en sortie du calculateur 70 sont principalement de deux natures :

- d'une part, des signaux d'asservissement $Dy_i$ et $Dz_i$, permettant de recaler l'axe $O_i$ de chaque récepteur $30_i$ sur l'axe du faisceau 51 reçu par ce récepteur,
- d'autre part, des ordres de commande (signaux OC) fournis aux actionneurs 20 permettant de contrôler l'évolution de la machine.

Le calculateur fournit également d'autres informations nécessaires à l'exploitation de la machine 10.

On va maintenant décrire le fonctionnement du dispositif.

Les informations relatives à la trajectoire de la machine 10, sous forme d'un fichier ASCII, sont enregistrées dans la mémoire vive du calculateur 70 par l'intermédiaire d'un support magnétique. Ces informations sont établies par les services de géodésie qui ont déterminé ou défini la surface de la route ou du chemin à façonner (la surface est numérisée).

Le calculateur reçoit à chaque instant des informations lui permettant de déterminer la position $Y_i$, $Z_i$ de chaque récepteur $30_i$. Ces informations proviennent, par l'intermédiaire de la carte DIO 216 (ICS) des capteurs de position (codeurs digitaux $125_i$, $126_i$) associés à chaque bloc de déplacement $60_i$, sous forme de signaux constitués d'une série d'impulsions que le calculateur compte ou décompte. De même, comme exposé plus haut, le calculateur reçoit les informations $dy_i$, $dz_i$ relatives à l'écart de l'axe $O_i$ de chaque récepteur $30_i$ par rapport à l'axe du faisceau laser 51. Il élabore un signal d'asservissement $Dy_i$ et $Dz_i$, transmis, par l'intermédiaire de la carte interface AO B12 (ICS), sous forme de signaux en tension au moteur de chaque ensemble moto-réducteur 122, 123 du bloc de translation $60_i$ pour recaler l'axe $O_i$ du récepteur $30_i$ considéré sur le faisceau.

Cette opération est effectuée pour chacun des récepteurs $30_i$.

A partir des informations $Y_i$ et $Z_i$ délivrées par chaque capteur de position associé au bloc de translation $60_i$, le calculateur connaît la position selon les axes $y_i$ et $z_i$ de chaque récepteur $30_i$. Il connaît par conséquent la position de la machine, car le compteur de distance 80 envoie un signal DP représentatif de la distance parcourue depuis une origine arbitrairement choisie.

Compte tenu des informations relatives à la trajectoire fournie par le fichier ASCII mis en mémoire vive du calculateur 70, et des diverses informations relatives à la position des récepteurs et de la machine, le calculateur élabore les ordres devant être appliqués aux divers actionneurs 20 contrôlant les évolutions de la machine, pour faire évoluer cette dernière le long du chemin théorique mis en mémoire du calculateur.

Diverses caractéristiques du mode de réalisation illustré en figure 1 doivent être soulignées, ainsi que leurs avantages corrélatifs.

Tout d'abord, on observera qu'un seul émetteur laser $50_{1,2}$ est utilisé pour les récepteurs $30_1$, et $30_2$ ; il en est de même pour les récepteurs $30_3$, $30_4$ qui sont associés à un seul émetteur $50_{3,4}$. Le nombre d'émetteurs utilisé est donc réduit (deux dans cet exemple, et non pas un par récepteur, soit quatre).

Ensuite, les capteurs de position associés à chaque bloc de translation portant les récepteurs $30_i$ délivrent des signaux selon deux degrés de liberté ($Y_i$, $Z_i$). Le calcultateur dispose donc de huit indications relatives à la position de la machine, en plus de celle relative à sa position le long du chemin parcouru fournie par le compteur de distance 80 (soit neuf indications de position au total). Il y a donc une importante redondance d'informations qui est mise à profit.

Tout d'abord, cette redondance est utilisée pour minimiser d'éventuelles erreurs, dues au capteur ou à une légère déviation des faisceaux laser. On utilise les informations issues des récepteurs $30_1$, $30_2$ et $30_3$, ainsi que du compteur de distance 80 (informations selon sept degrés de liberté) pour minimiser l'erreur relative à la position (six degrés de liberté nécessaires). De façon connue en soi, la minimisation des erreurs est faite en appliquant la méthode mathématique des moindres carrés.

Les informations issues du récepteur $30_4$ peuvent alors être utilisées dans deux buts.

Tout d'abord, on rappelle que les machines de travaux publics telles que la machine mentionnée plus haut ont une envergure particulièrement importante et peuvent, en dépit de leur rigidité, se déformer. Cette déformation, qui en pratique est un vrillage, nécessite, pour pouvoir être prise en compte par le calculateur, la mesure selon deux degrés de liberté supplémentaire : les informations issues du récepteur $30_4$ sont utilisées à cette fin. C'est pourquoi, on peut qualifier le récepteur $30_4$ de récepteur de "mesure de vrillage".

On peut également utiliser les mesures issues du récepteur $30_4$ lorsque, un ou plusieurs autres récepteurs $30_i$ sont désactivés ou hors service (voir infra). Dans un tel cas, l'ordinateur dispose toujours des informations en provenance des autres récepteurs, ce qui permet d'assurer un positionnement de la machine.

La machine décrite ici peut être simplifiée, dans l'hypothèse où on souhaiterait miniminer le nombre de récepteurs et, éventuellement, d'émetteurs laser.

Ainsi, par exemple, dans un second mode de réalisation, les récepteurs $30_3$ et $30_4$, ainsi que l'émetteur $50_{3,4}$ sont supprimés.

Dans une telle hypothèse, le calculateur 70 dispose grâce aux récepteurs $30_1$ et $30_2$ d'informations relatives :

- d'une part, aux angles de tangage (rotation de la machine mesurée autour d'un axe parallèle aux axes $y_i$) et de lacet (rotation mesurée autour d'un axe parallèle aux axes $z_i$). En effet, ces informations sont facilement obtenues car le faisceau $51_{1,2}$ est pointé sur les deux récepteurs $30_1$ et $30_2$ qui sont alignés.
- d'autre part, à la position de la machine, en translation sur les axes $y_i$ et $z_i$.

Le cinquième degré de liberté (dans cet exemple les informations relatives à l'angle de roulis, soit une rotation mesurée autour de l'axe x) peut alors être donné d'une manière générale par un capteur de position de machine apte à mesurer la position de la machine 10 selon le cinquième degré de liberté, et à générer un signal représentatif de celle-ci.

Dans l'exemple considéré, les informations relatives au roulis de la machine peuvent être données par un inclinomètre.

Le compteur de distance 80 fournit, quant à lui, la position de la machine sur le chemin (sixième degré de liberté).

L'inclinomètre, mentionné ci-dessus, peut d'ailleurs être remplacé, dans un troisième mode de réalisation, par un récepteur $30_3$ monté sur un bloc de translation $60_3$ identique à ceux décrits plus haut, et coopérant avec un émetteur positionné comme l'émetteur $50_{3,4}$ de la figure 1, (ce mode de réalisation est semblable au mode de réalisation illustré en figure 1, le récepteur $30_4$ ayant été supprimé). Cet agencement permet au calculateur de recevoir sept informations relatives à la position de la machine, et par conséquent de minimiser les erreurs rédisuelles. Toutefois, dans une telle hypothèse, des informations de mesure de vrillage ne sont pas prises en compte (ces informations ne sont pas nécessaires pour des machines de plus petite envergure que celle considérée jusqu'à présent).

D'autres combinaisons entre des capteurs de position de machine (compteur de distance, inclinomètre) et des récepteurs peuvent être envisagées, par exemple utilise dans un quatrième mode de réalisation les seuls récepteurs $30_i$, $30_3$ montés sur des blocs de déplacement $60_2$ et $60_3$, coopérant avec deux faisceaux laser parallèles, et il est mis en place, au niveau des extrémités latérales de la machine, deux compteurs de distance : le calculateur dispose ainsi d'informations selon six degrés de liberté, ce qui lui permet d'effectuer un calcul de position.

Les modes de réalisation mettant en oeuvre un plus petit nombre de récepteurs et/ou d'émetteurs lasers s'avèrent moins onéreux que le mode de réalisation décrit à l'appui de la figure 1 et peuvent être suffisants, compte tenu de la précision souhaitée dans certains cas d'application.

On observera en outre que la mise en place du dispositif de guidage conforme à l'invention sur une machine précédemment guidée par un fil est assez simplifiée. En effet, on peut s'arranger pour que les signaux $Y_i$ et $Z_i$ entrant dans le calculateur 70 soient de même nature que ceux préalablement délivrés par le système de guidage par fil. De plus les signaux OC en sortie du calculateur peuvent être les mêmes que ceux utilisés dans l'état de la technique.

On va maintenant décrire un autre aspect de la présente invention lui conférant un important avantage par rapport au système de guidage par fil.

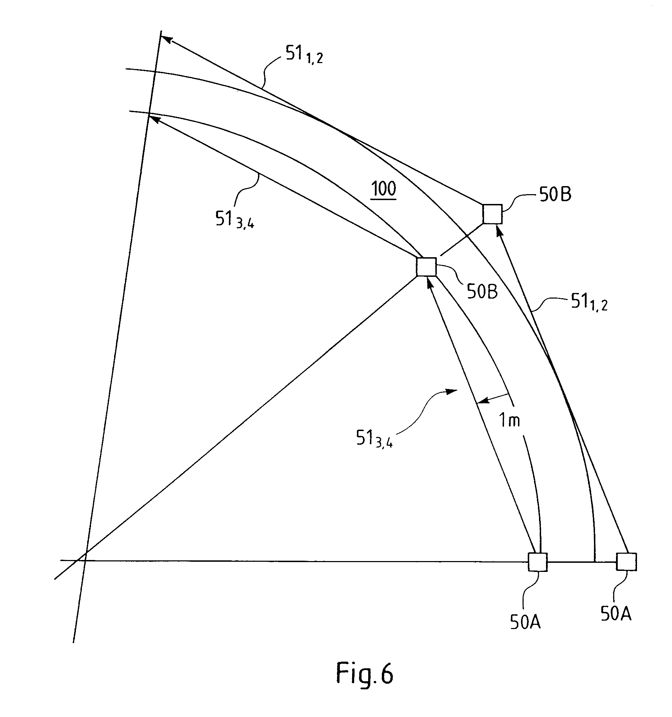

La figure 6 illustre le fait que dans le cadre de la présente invention, tout comme dans l'état de la technique, les courbes faites par la route ou le chemin devant être surfacés et recouverts, sont approximées au niveau du dispositif de guidage, par des segments de droite.

En figure 6, la route devant être façonnée est représentée sous la référence 100. Elle effectue une courbe de rayon R. Les faisceaux de guidage $51_{1,2}$ ; $51_{3,4}$ sont représentés. On observe que pour le tronçon de route 100, deux séries de faisceaux de guidage sont nécessaires.

Les faisceaux 51 sont émis par deux séries d'émetteurs 50A et 50B.

Les émetteurs 50A, 50B, et d'une manière générale tous les émetteurs nécessaires sont mis en place sur des trépieds de géodésie de structure classique. Ces trépieds sont munis en partie supérieure d'une plate-forme orientable dont l'axe de rotation est repéré et sur laquelle viennent se placer les émetteurs 50. La mise en place de ces trépieds est en pratique assurée par un géomètre qui utilise une mire d'alignement pour déterminer avec précision la position des axes de plate-forme.

Comme exposé à l'appui de la figure 3, chaque émetteur 50 comporte un récepteur d'alignement 57 de structure semblable aux récepteurs $30_i$. Ce récepteur est utilisé pour l'alignement des faisceaux 51. En effet, après que le faisceau ait été grossièrement pointé par le géomètre sur l'émetteur suivant (par exemple sur l'un des émetteurs 50B), un réglage fin peut être utilisé au moyen du récepteur d'alignement 57 que comporte cet émetteur, le centrage étant obtenu lorsque les signaux dy et dz, lus sur des voltmètres par un technicien, ont une valeur proche ou égale à zéro.

Les courbes de la route en construction sont ainsi approximées de proche en proche, en prenant en compte le fait que les blocs de translation ont une portée latérale (selon les axes $y_i$) maximale de 1 m.

Avec les émetteurs et récepteurs décrits ici, une portée de l'ordre de 200 m pour un rayon de courbe de 4500 m peut être obtenue. En revanche, si le rayon diminue, la distance maximale pratique d'utilisation diminue. Cette distance est ainsi, par exemple, de l'ordre de 50 m pour un rayon de courbe de route de 350 m. Dans tous les cas, la distance maximale d'utilisation est limitée par la flèche maximale est de 1 m (débattement maximum des blocs de translation selon les axes $y_i$).

L'avance de la machine se fait donc en remontant vers les émetteurs laser (dans l'exemple de la figure 6, des émetteurs 50A vers les émetteurs 50B). Dès qu'un émetteur est franchi, ce matériel devient disponible et peut être déplacé en aval. Ce processus d'alignement des émetteurs les uns sur les autres permet donc une avance sans interruption de la machine de travaux publics contrairement aux machines équipées de systèmes de guidage par fils.

En outre, grâce au dispositif de visée (en particulier grâce au faisceau laser visible émis par le laser 55) un réalignement est possible à tout instant.

Avantageusement, une alarme peut être déclenchée par le calculateur 70 dès qu'un récepteur $30_i$ se trouve près d'un émetteur laser, pendant l'avance de la machine. Le bras portant ce récepteur escamote alors automatiquement ce dernier. Les informations émises par ce récepteur ne sont alors plus disponibles pour le calcul. Plusieurs possibilités peuvent être mises en oeuvre pour permettre le guidage de la machine pendant le court instant où ce récepteur est indisponible :

- dans l'hypothèse où trois récepteurs sont encore disponibles, les informations relatives à la mesure de vrillage sont mises en consigne et les signaux émis par les trois autres récepteurs sont utilisés pour le guidage de la machine,
- dans l'hypothèse où deux récepteurs $30_i$ ou plus sont momentanément indisponibles, les informations relatives au guidage de la machine sont mises en consigne, assurant une trajectoire linéaire, jusqu'à ce que l'obstacle, constitué par l'émetteur ait été supprimé ou déplacé.

Bien entendu la présente invention n'est nullement limitée aux modes de réalisation décrits et à celui qui a été représenté mais englobe bien au contraire toutes variantes à la portée de l'homme de l'art.

## Revendications

1. Dispositif de guidage d'une machine de travaux publics (10) dont les évolutions sont contrôlées au moyen d'actionneurs (20), devant évoluer le long d'un chemin prédéterminé (100) dont la surface se développe selon trois dimensions, mettant en oeuvre au moins un émetteur laser ($50_{1,2}$) et un premier et second récepteurs laser ($30_1$, $30_2$), caractérisé en ce que les deux récepteurs laser sont montés chacun sur un bloc de déplacement, en translation ou rotation, ($60_1$, $60_2$) mo-

bile selon deux degrés de liberté, le dispositif comportant en outre :

- un ensemble de deux capteurs de position de récepteur ($125_i$, $126_i$) associé à chaque bloc de déplacement ($60_i$), les capteurs étant aptes à mesurer la position du bloc considéré selon deux degrés de liberté ($y_i$, $z_i$) et à générer des signaux représentatifs de celle-ci ($Y_i$, $Z_i$),
- un premier capteur de position de machine ($30_3$, $50_{3,4}$) apte à mesurer la position de la machine selon un cinquième degré de liberté, et à générer un signal représentatif de celle-ci ($Y_3$, $Z_3$),
- un calculateur (70) sensible auxdits signaux, apte à mémoriser, notamment, les caractéristiques géométriques dudit chemin, et adapté d'une part, à réaliser l'asservissement bidimensionnel de chaque récepteur ($30_1$, $30_2$) pour maintenir ce dernier centré sur le faisceau de l'émetteur laser ($50_{1,2}$), ou de l'un, prédéterminé, des émetteurs laser, et, d'autre part, à générer en temps réel les ordres de commande (OC) appliqués aux actionneurs (20) contrôlant la machine (10), notamment en fonction desdites caractéritiques géométriques, pour la faire évoluer le long dudit chemin (100).

2. Dispositif de guidage selon la revendication 1, caractérisé en ce que ledit premier capteur de position de machine est réalisé au moyen d'un troisième récepteur laser ($30_3$) coopérant avec un second émetteur laser ($50_{3,4}$), le troisième récepteur laser étant monté sur un troisième bloc de déplacement en translation ou rotation ($60_3$), mobile selon deux degrés de liberté ($y_3$, $z_3$) le dispositif comportant en outre un ensemble de deux capteurs de position de récepteur ($125_i$, $126_i$) associé au troisième bloc de déplacement et aptes à mesurer la position ($Y_3$, $Z_3$) de ce dernier selon deux degrés de liberté ($y_3$, $z_3$) et à générer un signal représentatif de celle-ci, tandis que le calculateur (70) est en outre adapté à prendre en compte les signaux issus des capteurs de position du troisième bloc et à réaliser l'asservissement bidimensionnel du troisième récepteur ($30_3$) pour maintenir ce dernier centré sur le faisceau ($51_{3,4}$) du second émetteur laser ($50_{3,4}$).

3. Dispositif de guidage selon la revendication 1 ou la revendication 2, caractérisé, en ce que dans le but de mesurer les déformations éventuelles de la machine de travaux publics, il comporte un autre récepteur ($30_4$) laser dit de "mesure de vrillage", associé à un autre émetteur laser ($50_{3,4}$) ce récepteur laser étant monté sur un bloc de déplacement en translation ou rotation ($60_4$) mobile selon deux degrés de liberté ($y_4$, $z_4$) le dispositif comportant) en outre un ensemble de deux capteurs de position de récepteur associé au bloc de déplacement portant le récepteur laser de mesure de vrillage et aptes à mesurer la position ($X_4$, $Z_4$) de ce dernier selon deux degrés de liberté ($y_4$, $z_4$) et à générer des signaux représentatifs de celle-ci, tandis que le calculateur (70) est en outre adapté à prendre compte les signaux issus des capteurs de position de récepteur du bloc portant le récepteur laser de mesure de vrillage ($30_4$) et à réaliser l'asservissement bidimensionnel de ce dernier, pour le maintenir centré sur le faisceau laser ($51_{3,4}$) dudit autre émetteur laser ($50_{3,4}$).

4. Dispositif de guidage selon les revendications 2 et 3, caractérisé en ce que les deux premiers récepteurs laser ($30_1$, $30_2$) sont alignés sur le faisceau ($51_{1,2}$) d'un premier émetteur laser ($50_{1,2}$) tandis que le troisième récepteur laser ($30_3$) et le récepteur laser de mesure de vrillage ($30_4$) sont alignés sur le faisceau ($51_{3,4}$) d'un second émetteur laser ($50_{3,4}$).

5. Dispositif selon l'une quelconque des revendications 1 à 4, caractérisé en ce qu'il comporte en outre un capteur (80) mesurant la position de la machine suivant le sixième degré de liberté.

6. Dispositif selon l'une quelconque des revendications 1 à 5, caractérisé en ce que les émetteurs comportent un récepteur (57) dit "d'alignement", apte à permettre l'alignement de l'émetteur considéré (50B) sur un autre émetteur agencé en amont (50A).

7. Dispositif selon l'une quelconque des revendications 1 à 6, caractérisé en ce que les émetteurs laser (50) comportent en outre un second faisceau laser, émettant dans le visible (55), pour faciliter le pointage du faisceau principal (51) de l'émetteur considéré (50).

Fig.1

EP 0 541 417 A1

Fig. 2

Fig. 2a

Fig.3

Fig.4

Fig.5

Fig.6

**Office européen des brevets**

# RAPPORT DE RECHERCHE EUROPEENNE

Numero de la demande

EP 92 40 2882

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y<br>A | FR-A-2 078 995 (SIEMENS)<br>* page 4, ligne 2 - page 7, ligne 21; figures 1,2 * | 1<br>2,4 | E02F3/84 |
| Y<br>A | US-A-3 953 145 (TEACH)<br>* colonne 3, ligne 25 - colonne 6, ligne 9; figures 1-4 * | 1<br>5 | |
| A | EP-A-0 443 026 (KABUSHIKI KAISHA KOMATSU SEISAKUSHO)<br>* colonne 8, ligne 31 - colonne 14, ligne 17; figures 4-10 * | 1,5,6 | |
| A | DE-A-3 827 619 (PERTL)<br>* colonne 2, ligne 41 - colonne 5, ligne 19; figures 1-4 * | 1,2 | |
| A | PATENT ABSTRACTS OF JAPAN<br>vol. 11, no. 91 (P-558)(2538) 23 Mars 1987<br>& JP-A-61 243 510 ( TOYOTA ) 29 Octobre 1986<br>* abrégé * | 1,2 | **DOMAINES TECHNIQUES RECHERCHES (Int. Cl.5 )** |
| A | US-A-3 914 064 (GURRIES)<br>* colonne 9, ligne 43 - colonne 11, ligne 39; figures 1,6,7 * | 1 | E02F<br>G05D |

-----

Le présent rapport a été établi pour toutes les revendications

| Lieu de la recherche | Date d'achèvement de la recherche | Examinateur |
|---|---|---|
| LA HAYE | 28 DECEMBRE 1992 | CALARASANU |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)